# EUROPÄISCHE PATENTANMELDUNG

(11) **EP 2 698 052 A1**
(43) Veröffentlichungstag der Anmeldung: **19.02.2014**
(21) Anmeldenummer: 13401077.6
(22) Anmeldetag: 01.08.2013
(51) Int. Cl.: A01C 19/02, A01C 17/00

(54) **Landwirtschaftliche Maschine**

(30) Priorität: 14.08.2012 DE 102012107428
(71) Anmelder: Amazonen-Werke H. Dreyer GmbH & Co. KG, 49205 Hasbergen (DE)
(72) Erfinder: Rahe, Florian, 49504 Lotte (DE)

(57) **Zusammenfassung**

Landwirtschaftliche Maschine mit von einem Elektromotor (18) rotierend angetriebenen Maschinenelement (6), wobei der Elektromotor (18) einen mit dem rotierend angetriebenen Maschinenelement (6) verbundenen Rotor (6 oder 10) mit mehreren Dauermagneten (17) oder verbundenen oder geschlossenen Spulen (12, 13, 14) oder eine magnetische leitfähige Struktur aufweisenden Elementen einerseits und andererseits einen Spulen aufweisenden und am Maschinenrahmen (1) angeordneten Stator (11) besitzt. Um einen kompakt bauenden elektrischen Antrieb für rotierende angetriebene Maschinenelemente (6) zu schaffen, ist vorgesehen, dass der Rotor (6, 10), an dem die Dauermagneten (17) oder verbundene oder kurzgeschlossene Spulen (12, 13, 14) oder eine magnetische leitfähige Struktur aufweisende Elemente befestigt sind, selbst das rotierend angetriebene Maschinenelement (6) und/oder die das Maschinenelement (6) unmittelbar tragende Nabe (10) der landwirtschaftlichen Maschine ist.

## Beschreibung

Die Erfindung betrifft eine landwirtschaftliche Maschine gemäß des Oberbegriffes des Patentanspruches 1.

Derartige landwirtschaftliche Maschinen sind beispielsweise in DE 28 43 487 A1, EP 1 605 747 B1 beschrieben. Bei diesen als Schleuderdüngerstreuer ausgebildeten landwirtschaftlichen Maschinen werden die den auszubringenden Dünger in Breitverteilung verteilenden Schleuderscheiben von am Rahmen angeordneten herkömmlichen Elektromotoren angetrieben. Das Gehäuse der Elektromotoren ist am Rahmen befestigt und die jeweilige Ausgangswelle des jeweiligen Elektromotors ist mit der die Schleuderscheibe tragenden Welle über ein Kopplungselement verbunden. Für die Anordnung der herkömmlich ausgestalteten Elektromotoren zum Antrieb der jeweiligen Schleuderscheibe muss ein entsprechend großer Bauraum vorgesehen werden.

Der Erfindung liegt die Aufgabe zu Grunde, einen kompakt bauenden elektrischen Antrieb für rotierend angetriebene Maschinenelemente zu schaffen.

Diese Aufgabe wird erfindungsgemäß dadurch gelöst, dass der Rotor, an dem die Dauermagneten oder verbundene oder kurzgeschlossene Spulen oder eine magnetische leitfähige Struktur aufweisende Elemente befestigt sind, selbst das rotierend angetriebene Maschinenelement und/oder die das Maschinenelement unmittelbar tragende Nabe der landwirtschaftlichen Maschine ist.

Infolge dieser Maßnahme wird ein echter elektrischer Direktantrieb für die motorisch rotierend angetriebenen Maschinenelemente geschaffen. Es werden die den Kern des Elektromotors bildenden Bauteile, nämlich die Dauermagneten, kurz geschlossene Spulen oder magnetisch leitfähige Strukturen aufweisenden Elemente unmittelbar zwischen dem Maschinenrahmen und dem rotierend angetriebenen Maschinenelementen angeordnet, so dass der Elektromotor in das jeweilige angetriebene Maschinenteile unmittelbar in integrierter Weise angeordnet ist.

Ein derartig ausgestalteter Elektromotor mit den angetriebenen Maschinenelementen ist sehr kompakt ausgestaltet. Ein Elektromotor besteht aus einem Stator, der am Maschinenrahmen angeordnet ist, und dem sich drehenden Maschinenteil. Der als Synchronmotor ausgebildete Elektromotor weist einen sich drehenden Teil aus Magneten und der Stator weist Spulen, die ein wechselndes Magnetfeld erzeugen, auf. Je größer der Durchmesser eines solchen Motors ist, desto größer wird das Drehmoment und je kleiner wird die Drehzahl. Dies ist für viele Einsatzfälle in der Landwirtschaft optimal, so auch zum Antrieb für Schleuderscheiben eines Düngerstreuers. Für den Antrieb derartiger rotierender Maschinenelemente wird bei relativ kleiner Drehzahl mit einem großen Drehmoment gearbeitet. In einer einfachen Ausführung können die Magneten des Motors ganz einfach auf die Schleuderscheibe oder die die Schleuderscheibe tragenden Nabe, die die Scheibe mit der Lagerwelle verbindet, angeordnet, vorzugsweise angeklebt werden. Am Maschinenrahmen sind die Spulen befestigt. Durch diese einfache Anordnung ist schon ein Elektromotor zum Antrieb des Maschinenelements geschaffen. Das Gehäuse und die Lagerung für den eigentlichen Elektromotor kann wegfallen, da die Maschinenelemente bereits am Maschinenrahmen mit entsprechenden Lagerungen gelagert sind. Somit ergibt sich ein sehr kostengünstiger Aufbau. Der Aufbau dieses Elektromotors entspricht einem im Kreis gebogenen Linearmotor.

Ein einfacher Aufbau des erfindungsgemäßen Elektromotors lässt sich dadurch verwirklichen, dass der Rotor mit den Dauermagneten oder verbundenen oder geschlossenen Spulen oder eine magnetische leitfähige Struktur aufweisenden Elementen ohne Zwischenschaltung einer Antriebswelle direkt und/oder direkt mit der das Maschinenelement unmittelbar tragenden Nabe mit dem rotierend angetriebenen Maschinenelement verbunden ist.

In einer Ausführungsform ist vorgesehen, dass das rotierend angetriebene Maschinenelement die Schleuderscheibe oder die Nabe, mit der die Schleuderscheibe verbunden ist, eines Schleuderstreuers ist. Hierdurch kann in einfacher Weise die Schleuderscheibe mit einem kompakt bauenden Elektromotor angetrieben werden

Eine einfache Anordnung der Bauteile des erfindungsgemäßen Elektromotor bei einem Schleuderstreuer zum Antrieb der Schleuderscheibe lässt sich dadurch realisieren, dass die Schleuderscheibe oder die Nabe, mit der die Schleuderscheibe verbunden ist, unmittelbar ohne Zwischenschaltung eines Getriebes mittels Lagerelemente drehbar am Maschinenrahmen angeordnet ist.

In einer anderen Ausführungsform ist vorgesehen, dass das rotierend angetriebene Maschinenelement der Gebläserotor eines Gebläses oder die Nabe, auf die der Gebläserotor eines Gebläses, befestigt ist, vorzugsweise einer landwirtschaftlichen Verteilmaschine, insbesondere eine Sämaschine ist. Hierdurch lässt sich in einfacher Weise durch einen kompakt bauenden Elektromotor der Gebläserotor von landwirtschaftlichen Verteilmaschinen antreiben.

In einer weiteren Ausführungsform ist vorgesehen, dass das rotierend angetriebene Maschinenelement die Antriebsscheibe eines Bodenbearbeitungskreisels oder die Nabe, auf die die Antriebsscheibe eines Bodenbearbeitungskreisel befestigt ist, ist.

Der kompakte Aufbau eines erfindungsgemäßen Elektromotors, um die Anordnung dessen erforderlicher Bauteile lässt sich dadurch in einfacher Weise realisieren, dass die Dauermagneten oder verbundenen oder kurzgeschlossenen Spulen an dem rotierend angetriebenen Maschinenelement oder der das rotierend angetriebene Maschinenelement tragenden Nabe angeklebt sind.

Eine vorteilhafte Anordnung der Dauermagneten lässt sich dadurch erreichen, dass die Dauermagneten in Vertiefungen des rotierend angetriebenen Maschinenelement oder der das rotierend angetriebene Maschinenelement tragenden Nabe angeordnet sind.

Um in die Dauermagneten oder die Spulen in einfacher Weise sicher anordnen zu können, ist in einer Ausgestaltung vorgesehen, dass um die Dauermagneten oder verbundenen oder kurzgeschlossenen Spulen zumindest eine ringförmige Halterung und/oder ein ringförmiges Halteband angeordnet ist.

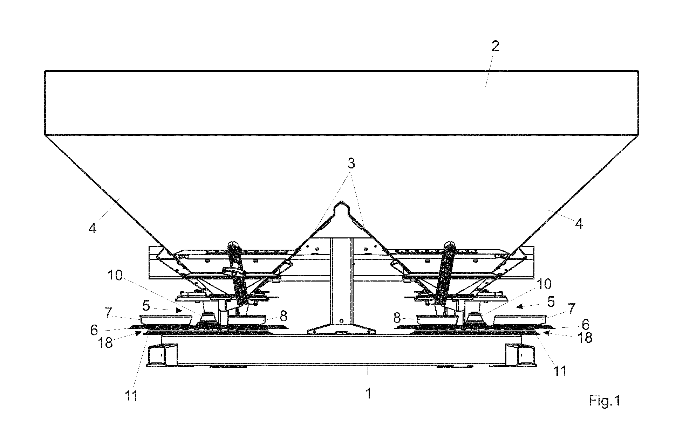

Weitere Einzelheiten der Erfindung sind der Beispielsbeschreibung zu entnehmen. Die Zeichnungen zeigen
- Fig.1: einen Schleuderdüngerstreuer in der Ansicht von hinten,

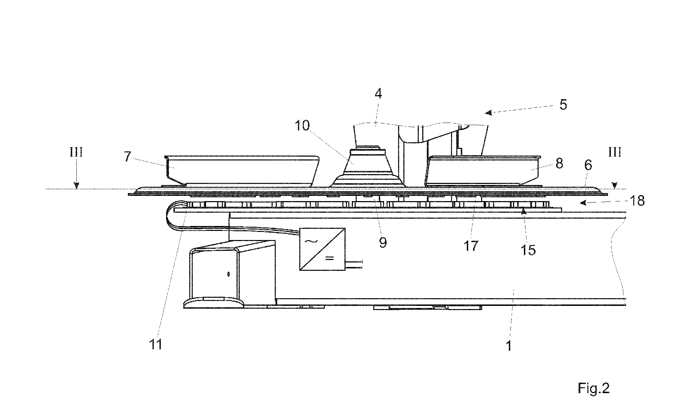

- Fig.2: den Fahrtrichtung gesehen unteren linken Bereich des Schleuderdüngerstreuers mit den erfindungsgemäßen elektromotorischen Antrieb in vergrößertem Maßstab und in der Ansicht von hinten,
- Fig.3: den elektromotorischen Antrieb gemäß dem Schnitt III - III und
- Fig.4: den elektromotorischen Antrieb gemäß der Darstellung in Fig.3, jedoch in einer perspektivischer Darstellungsweise.

Der Schleuderdüngerstreuer weist einen Rahmen 1 und einen Vorratsbehälter 2 auf. Auf der Vorderseite des Rahmens 1 sind in bekannter und daher nicht näher dargestellter Weise Dreipunktkupplungselemente zum Anbau an einen Schlepperkraftheber angeordnet. Der Vorratsbehälter 2 weist in seinem unteren Bereich die beiden durch das dachförmige Mittelteil 3 voneinander getrennten Auslauftrichter 4 auf. Die Auslauftrichter 4 sind jeweils durch ein Dosierorgan 5 abgeschlossen. Unterhalb der Dosierorgane 5 ist jeweils eine rotierend angetriebene Schleuderscheibe 6 angeordnet. Die Dosierorgane 5 leiten das sich im Vorratsbehälter 2 befindliche zu verteilende Material in einstellbaren Mengen den Schleuderscheiben 6 zu. Auf den Schleuderscheiben 6 sind Wurfschaufeln 7 und 8 angeordnet, welche das ihnen zugeleitete Material in Bereitverteilung auf der Bodenoberfläche verteilen.

Jede Schleuderscheibe 6 ist über eine an der Lagerwelle 9 befestigte Nabe 10 angeordnet. Die Lagerwelle 9 ist mittels einer nicht dargestellten Lageranordnung am Rahmen 1 drehbar gelagert.

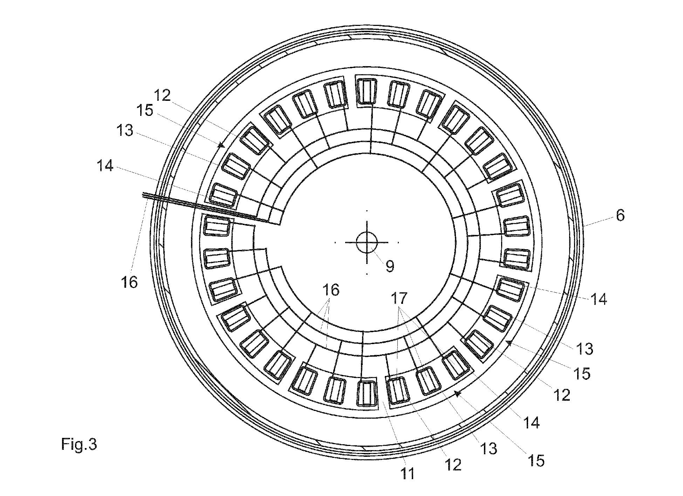

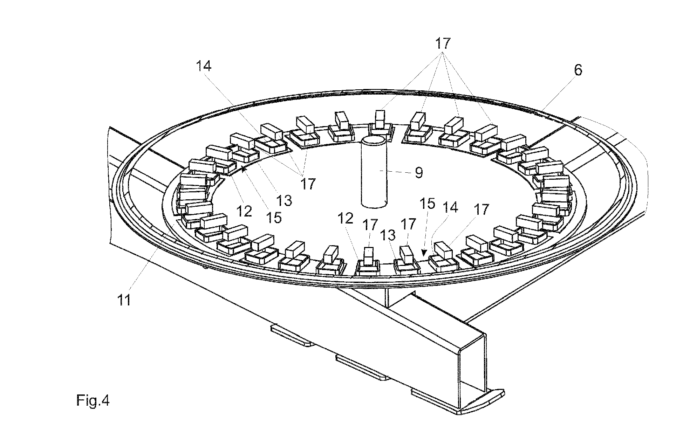

Auf dem Rahmen 1 und unterhalb der Schleuderscheibe 6 ist eine Zwischenplatte 11 befestigt, auf welcher miteinander verbundene Spulen 12, 13, 14 in kreisförmige Anordnung angeordnet sind, wie die Fig. 3 und 4 zeigen. Hierbei sind jeweils drei Spulen 12, 13, 14 zu einem Block zusammengefasst, wie Fig.3 zeigt. Die Einzelspulen 12, 13, 14 sind über Leitungen 16 miteinander verwunden. Diese Leitungen 16 sind an eine elektrische Energiequelle angeschlossen, beispielsweise einem auf dem Schlepper, welcher den Düngerstreuer trägt, angeordneten Generator. Auf der Unterseite der Schleuderscheibe 6 sind Dauermagneten 17 angeordnet. Diese Dauermagneten 17 können dort mittels einer Klebeschicht befestigt sein.

Die Schleuderscheibe 6 bildet in diesem Falle das motorisch angetriebene Maschinenelement, nämlich den Rotor. Der Stator wird von der an dem Rahmen befestigten Zwischenplatte 11, auf denen die Spulen 12, 13, 14 angeordnet sind, gebildet.

Somit ist der von der Schleuderscheibe 6 gebildete Rotor mit den Dauermagneten 17 und den Spulen 12, 13, 14 ohne Zwischenschaltung einer Antriebswelle direkt mit der das Maschinenelement, hier die Schleuderscheibe 6 unmittelbar tragenden Nabe 10 mit dem rotierenden angetriebenen Maschinenelement 6 verbunden. Die Schleuderscheibe 6 mit der Nabe 10, mit welcher die Schleuderscheibe 6 verbunden ist, bildet also das rotierend angetriebene Maschinenelement.

Die Schleuderscheibe 6 mit der Nabe 10, mit welcher die Schleuderscheibe 6 verbunden ist, ist somit unmittelbar ohne Zwischenschaltung eines Getriebes mittels Lagerelementen drehbar am Maschinenrahmen 1 angeordnet.

Die Dauermagneten 17 können in Vertiefungen der Schleuderscheibe 6 oder bei einer entsprechenden groß ausgestalteten Nabe 10 in der Nabe 10 angeordnet sein. Weiterhin kann um die Dauermagneten 17 oder Spulen 12, 13, 14 zumindest eine ringförmige Halterung oder ein ringförmiges Halteband in nicht dargestellter Weise angeordnet sein.

Anstelle der Magneten 17 können auch eine magnetische leitfähige Struktur aufweisende Elemente oder miteinander verbundene Spulen vorgesehen sein

Über die Leitungen 16 wird er den Spulen 12, 13, 14 elektrische Energie zugeführt. Hierdurch wird ein elektrisch - magnetisches Feld erzeugt. Hierdurch wird, wie es bei Elektromotoren allgemein bekannt ist, der mit den Dauermagneten 17 ausgerüsteter Rotor, der von der Schleuderscheibe 6 gebildet wird, in Rotation versetzt. Somit ist also der Elektromotor 18 unmittelbar zwischen den Maschinenrahmen 1 und der Schleuderscheibe 6 oder der Nabe 10 in integrierter Weise angeordnet, ohne dass ein separates Bauteil als Elektromotor eingesetzt werden muss.

Ein derartig ausgestalteter Motor 18 lässt sich auch bei dem Gebläserotor eines Gebläses einsetzen, welches beispielsweise bei einer landwirtschaftlichen Verteilmaschine, insbesondere als Sämaschine ausgebildet ist.

## Patentansprüche

1. Landwirtschaftliche Maschine mit von einem Elektromotor rotierend angetriebenen Maschinenelement, wobei der Elektromotor einen mit dem rotierend angetriebenen Maschinenelement verbundenen Rotor mit mehreren Dauermagneten oder verbundenen oder geschlossenen Spulen oder eine magnetische leitfähige Struktur aufweisenden Elementen einerseits und andererseits einen Spulen aufweisenden und am Maschinenrahmen angeordneten Stator besitzt, **dadurch gekennzeichnet, dass** der Rotor (6), an dem die Dauermagneten (17) oder verbundene oder kurzgeschlossene Spulen (12, 13, 14, 15) oder eine magnetische leitfähige Struktur aufweisende Elemente befestigt sind, selbst das rotierend angetriebene Maschinenelement (6) und/oder die das Maschinenelement (6) unmittelbar tragende Nabe (10) der landwirtschaftlichen Maschine ist.

2. Landwirtschaftliche Maschine nach Anspruch 1, **dadurch gekennzeichnet, dass** der Rotor (6) mit den Dauermagneten (17) oder verbundenen oder geschlossenen Spulen (12, 13, 14, 15) oder eine magnetische leitfähige Struktur aufweisenden Elementen ohne Zwischenschaltung einer Antriebswelle direkt und/oder direkt mit der das Maschinenelement (6) unmittelbar tragenden Nabe (10) mit dem rotierend angetriebenen Maschinenelement (6) verbunden ist.

3. Landwirtschaftliche Maschine nach Anspruch 1, **dadurch gekennzeichnet, dass** das rotierend angetriebene Maschinenelement die Schleuderscheibe (6) oder die Nabe (10), mit der die Schleuderscheibe (6) verbunden ist, eines Schleuderstreuers ist.

4. Landwirtschaftliche Maschine nach zumindest einem der vorstehenden Ansprüche, **dadurch gekennzeichnet, dass** die Schleuderscheibe (6) oder die Nabe (10), mit der die Schleuderscheibe (6) verbunden ist, unmittelbar ohne Zwischenschaltung eines Getriebes mittels Lagerelemente drehbar am Maschinenrahmen (1) angeordnet ist.

5. Landwirtschaftliche Maschine nach Anspruch 1, **dadurch gekennzeichnet, dass** das rotierend angetriebene Maschinenelement der Gebläserotor eines Gebläses oder die Nabe, auf die der Gebläserotor eines Gebläses, befestigt ist, vorzugsweise einer landwirtschaftlichen Verteilmaschine, insbesondere eine Sämaschine ist.

6. Landwirtschaftliche Maschine nach Anspruch 1, **dadurch gekennzeichnet, dass** das rotierend angetriebene Maschinenelement die Antriebsscheibe eines Bodenbearbeitungskreisel oder die Nabe, auf die die Antriebsscheibe eines Bodenbearbeitungskreisel befestigt ist, ist.

7. Landwirtschaftliche Maschine nach zumindest einem der vorstehenden Ansprüche, **dadurch gekennzeichnet, dass** die Dauermagneten (7) oder verbundenen oder kurzgeschlossenen Spulen (12, 13, 14, 15) an dem rotierend angetriebenen Maschinenelement (6) oder der das rotierend angetriebene Maschinenelement (6) tragenden Nabe (10) angeklebt sind.

8. Landwirtschaftliche Maschine nach zumindest einem der vorstehenden Ansprüche, **dadurch gekennzeichnet, dass** die Dauermagneten (17) in Vertiefungen des rotierend angetriebenen Maschinenelement (6) oder der das rotierend angetriebene Maschinenelement (6) tragenden Nabe (10) angeordnet sind.

9. Landwirtschaftliche Maschine nach zumindest einem der vorstehenden Ansprüche, **dadurch gekennzeichnet, dass** um die Dauermagneten (6) oder verbundenen oder kurzgeschlossenen Spulen (12, 13, 14, 15) zumindest eine ringförmige Halterung und/oder ein ringförmiges Halteband angeordnet ist.
